# EUROPÄISCHE PATENTSCHRIFT

(11) **EP 1 748 453 B1**
(45) Veröffentlichungstag und Bekanntmachung des Hinweises auf die Patenterteilung: **17.10.2007**
(21) Anmeldenummer: 06019242.4
(22) Anmeldetag: 11.11.2003
(51) Int. Cl.: H01H 25/00

(54) **Elektrischer Schalter**
Electric switch
Interrupteur électrique

(30) Priorität: 16.11.2002 DE 10253462
(43) Veröffentlichungstag der Anmeldung: 31.01.2007
(62) Teilanmeldung aus: 03778254.7
(73) Patentinhaber: Delphi Technologies, Inc., Troy, Michigan 48007 (US)
(72) Erfinder: Rudolph, Gerd, 55459 Aspisheim (DE); Trein, Andreas, 55618 Simmertal (DE)
(74) Vertreter: Becker, Bernd

(56) Entgegenhaltungen:
- EP-A- 0 901 262
- DE-U- 20 206 744
- US-A1- 2001 019 012

## Beschreibung

Die Erfindung bezieht sich auf einen elektrischen Schalter, insbesondere Lenkradschalter, mit einem schwenk- und drehbar in einem Gehäuse gelagerten, durch Druck und Drehung beaufschlagbaren Betätigungselement, in dessen eine Stirnseite eine mit dem Gehäuse verbundene flexible Achse oder eine flexibel an dem Gehäuse angelenkte Achse eingreift.

Aus der Praxis ist ein elektrischer Schalter bekannt, der zur Leuchweitenregulierung von Frontscheinwerfern eines Kraftfahrzeuges dient und dessen walzenförmiges Betätigungselement um seine Längsachse drehbar gelagert ist. Die Drehung des Betätigungselementes ist bei diesem Schalter beschränkt, da die Frontscheinwerfer nur um einen bestimmten Winkel verschwenkt werden dürfen. Eine Druckbeaufschlagung des Betätigungselementes zur Realisierung weiterer Schaltfunktionen ist nicht vorgesehen.

Im Weiteren ist ein Schalter der eingangs genannten Art durch seine Verwendung in einer Computer-Maus bekannt. Das radförmige Betätigungselement, ein so genanntes Scroll-Rad, dient zur Bildschirmsteuerung und ist durch Drehung oder Druck beaufschlagbar. Hierzu ist das Betätigungselement jeweils stirnseitig in einem Gehäuse der Computer-Maus sowohl drehbar als auch in Druckrichtung vertikal verschiebbar gelagert. Das Betätigungselement befindet sich in einer Stützvorrichtung unter der ein Mikroschalter angeordnet ist. Aufgrund der übereinander liegenden Anordnung von Betätigungselement, Stützvorrichtung und Mikroschalter weist dieser Schalter einen relativ hohen Aufbau auf.

Darüber hinaus offenbart die EP 0 901 262 A2 einen elektrischen Schalter mit einem schwenk- und drehbar in einem Gehäuse gelagerten, durch Druck und Drehung beaufschlagbaren Betätigungselement, wobei das Betätigungselement in einem schwenkbaren Schaltrahmen drehbar gelagert ist. Das Betätigungselement ist um 360° drehbar gelagert und weist mehrere jeweils 30° umfassende Schaltsegmente auf, um eine entsprechende Menü-Steuerung vorzunehmen.

Ferner ist aus der US 2001/0019012 A1 ein elektrischer Schalter mit einem schwenk- und drehbar in einem Gehäuse gelagerten, durch Druck und Drehung beaufschlagbaren Betätigungselement bekannt, wobei das Betätigungselement mittels einer flexiblen Achse drehbar gelagert ist.

Schließlich zeigt die DE 202 06 744 U1 einen elektrischen Schalter, dessen Betätigungselement an einer seiner Stirnseiten ein zahnkranzartiges Nockenrad aufweist, dem ein in dieses eingreifender schwenkbarer Schaltnocken zur alternativen Betätigung von zwei Schaltkontakten in Abhängigkeit von der Drehrichtung zugeordnet ist.

Es ist Aufgabe der Erfindung, einen elektrischen Schalter der eingangs genannten Art zu schaffen, der einfach zu handhaben ist und einen kompakten Aufbau aufweist.

Erfindungsgemäß wird die Aufgabe dadurch gelöst, dass die andere Stirnseite des Betätigungselementes einen Zapfen aufweist, der zwischen gehäuseseitigen Stegen angeordnet ist, wobei der dem Zapfen zugeordnete Schenkel als Betätiger für ein erstes Schaltelement bei einer Druckbeaufschlagung des Betätigungselementes dient und der dem Betätiger gegenüberliegende Schenkel der Gabel als federnder Rastarm ausgebildet ist, der mit einer Rastkurve des Betätigungselementes zusammenwirkt.

Somit führt das Betätigungselement bei einer Druckbeaufschlagung eine Schwenkbewegung aus, weshalb es nicht erforderlich ist ein dieser Beaufschlagungsrichtung zugeordnetes Schaltelement direkt unterhalb des Betätigungselementes anzuordnen. Vielmehr ist eine Platzierung des Schaltelementes versetzt zum Betätigungselement möglich, wodurch der Schalter eine relativ geringe Bauhöhe und damit einen kompakten Aufbau aufweist. Mit einem solchen Schalter wird beispielsweise durch die Druckbeaufschlagung eine erste Schaltfunktion ausgeführt, die eine zweite, durch eine Drehung des Betätigungselementes auszuführende Schaltfunktion aktiviert. Es ist z.B. möglich, durch ein Drücken des Betätigungselementes eine Steuerung eines Bordcomputers eines Kraftfahrzeuges zu aktivieren und eine Navigation durch ein Menü des Bordcomputers durch ein anschließendes Drehen des Betätigungselementes in die eine oder andere Richtung vorzunehmen. Sonach ist eine versehentliche Navigation ausgeschlossen. Selbstverständlich ist auch eine gleichzeitige Beaufschlagung durch Druck und Drehung des Betätigungselementes möglich. Zur Realisierung einer konstruktiv relativ einfachen Lagerstelle ist der Zapfen zwischen den gehäuseseitigen Stegen angeordnet. Die Stege können beispielsweise einteilig mit dem Gehäuse gefertigt werden und sind derart zueinander beabstandet, dass sie den Zapfen mit einem geringen radialen Spiel hin- und herverschiebbar lagern. Aufgrund der Lagerung des Betätigungselemeentes wird durch die Übertragung der Schwenkbewegung des Betätigungselementes auf die Gabel und deren Betätiger ein bestimmter Schaltweg bereitgestellt. Darüber hinaus ist durch den einstückig mit der Gabel verbundenen Betätiger eine zuverlässige Beaufschlagung des ersten Schaltelementes gewährleistet. Durch das Zusammenwirken des federnden Rastarmes mit der Rastkurve des Betätigungselementes ist ein taktil erfassbares Schaltgefühl bei der Drehung des Betätigungselementes sichergestellt.

Selbstverständlich ist es im Rahmen der Erfindung auch möglich, die Achse lediglich in einem Teilbereich elastisch auszubilden, um ein Verschwenken des Betätigungselementes zu erreichen.

Zweckmäßigerweise weist der Rastarm an seinem freien Ende einen in die stirnseitig in das Betätigungselement eingelassene Rastkurve eingreifenden Nocken auf. Durch das Zusammenwirken des Nockens des Rastarmes mit der Rastkurve des Betätigungselementes ist eine schrittweise Drehung des Betätigungselementes gegeben.

Um eine zuverlässige Lagerung der Gabel bereitzustellen, umfasst bevorzugt die Gabel einen den Betätiger und den Rastarm jeweils endseitig verbindenden, im Querschnitt zylindrischen Steg, der mit einem Sockel des Gehäuses verklipst ist. Die Schwenkbewegung der Gabel bei einer Beaufschlagung durch das Betätigungselement erfolgt somit um die Längsachse des drehbaren Steges.

Zweckmäßigerweise ist das erste Schaltelement als dem Sockel zugeordneter Tastschalter ausgebildet. Dem Tastschalter können mehrere durch Mehrfachbeaufschlagung auszulösende Schaltfunktonen zugeordnet sein.

Zur Rückstellung des Betätigungselementes über den Betätiger nach einem Loslassen umfasst der Tastschalter einen in einem Dom einer flexiblen Schaltmatte angeordneten Schaltkontakt zur Beaufschlagung eines zugeordneten Festkontaktes. Die Rückstellkraft wird durch die Schaltmatte bewirkt.

Vorzugsweise weist das Betätigungselement auf der dem Betätiger zugeordneten Stirnseite in Umfangsrichtung weisende Schaltnocken zur Beaufschlagung eines zweiten Schaltelementes bei einer Drehung des Betätigungselementes auf. Bevorzugt ist das zweite Schaltelement als dem Sockel zugeordneter 2-Wege-Schaltdetektor ausgebildet, dessen Schaltarm mit den Schaltnocken des Betätigungselementes zusammenwirkt. Die Stellung der Schaltnocken korrespondiert zu den durch die Rastkurve vorgegebenen Drehschritten des Betätigungselementes. Der 2-Wege-Schaltdetektor registriert sowohl die Drehrichtung als auch die durch die Schaltnocken bewirkten Beaufschlagungen.

Zweckmäßigerweise stehen das erste Schaltelement und das zweite Schaltelement mit einer im Sockel angeordneten Leiterplatte in Verbindung. Zur Realisierung weiterer Funktionen des Schalters sind auf der Leiterplatte weitere Einzelschalter und/oder Leuchtdioden befestigt.

Um eine leichte Bedienbarkeit sicherzustellen, ist das Gehäuse mit einem eine Öffnung für das Betätigungselement aufweisenden Deckel versehen, wobei das Betätigungselement abschnittsweise durch die Öffnung ragt. Ferner ist die Umfangsfläche des Betätigungselementes genoppt.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand mehrerer Ausführungsbeispiele unter Bezugnahme auf die zugehörigen Zeichnungen näher erläutert. Es zeigen:

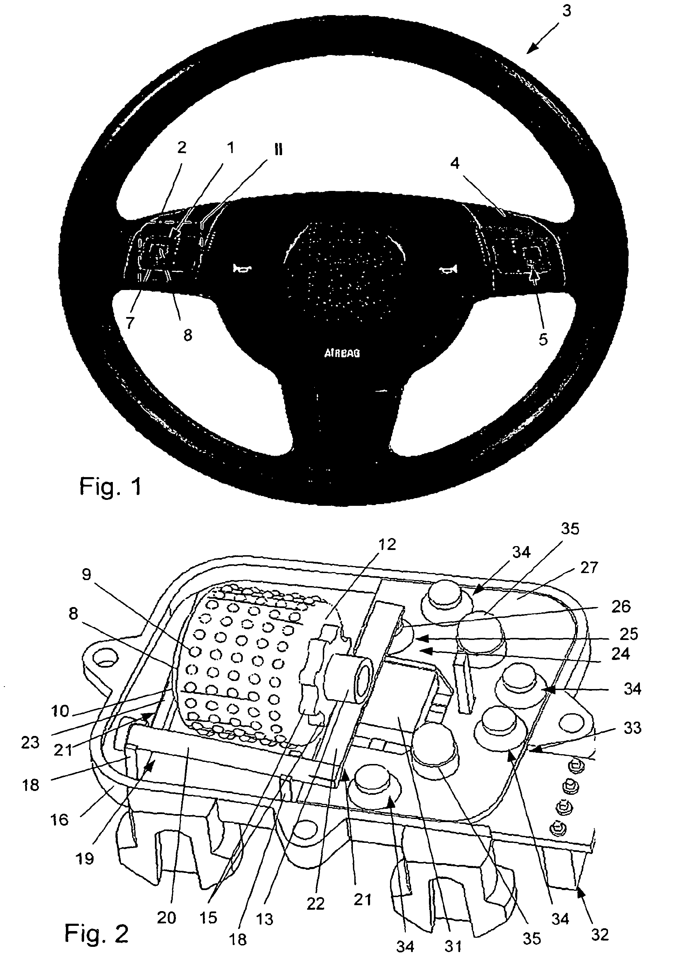

- Fig.1: eine Darstellung eines Lenkrades eines Kraftfahrzeuges mit einem erfindungsgemäßen elektrischen Schalter,
- Fig.2: eine vergrößerte Teildarstellung einer perspektivischen Ansicht einer Einzelheit II nach Fig. 1 von oben,

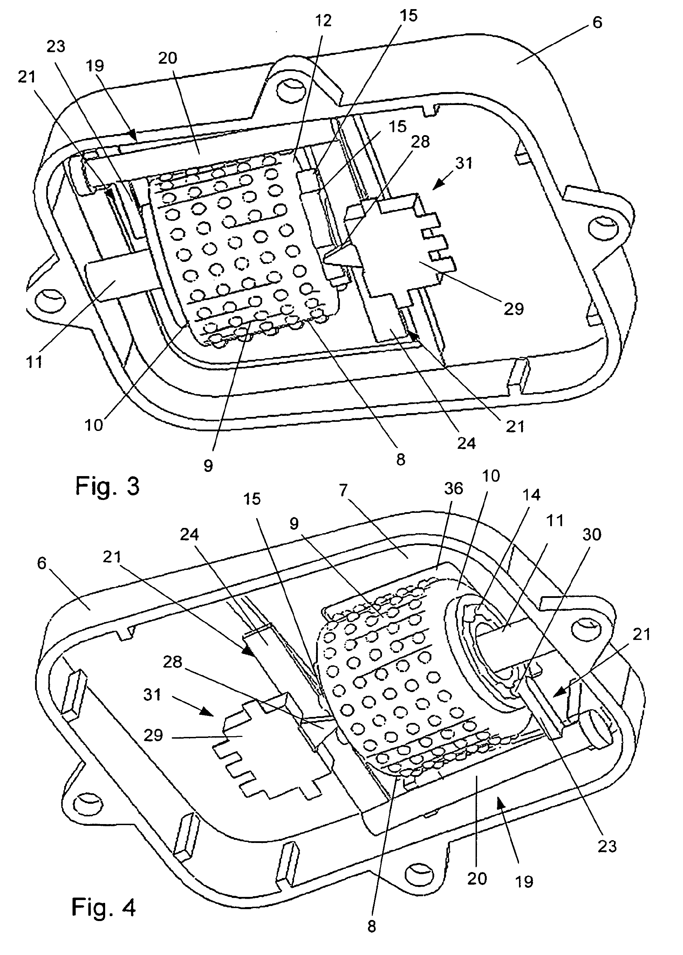

- Fig.3: eine vergrößerte Teildarstellung einer perspektivischen Ansicht der Einzelheit II nach Fig. 1 von unten und
- Fig.4: eine vergrößerte Teildarstellung einer weiteren perspektivischen Ansicht der Einzelheit II nach Fig. 1 von unten.

Der erfindungsgemäße Schalter 1 ist als Lenkradschalter in eine Speiche 2 eines Lenkrades 3 eines Kraftfahrzeuges eingebaut. In der anderen Speiche 4 befindet sich ein Drehschalter 5.

Der Schalter 1 umfasst ein Gehäuse 6 mit einem eine Öffnung 36 aufweisenden Deckel 7, wobei ein walzenförmiges Betätigungselement 8 mit genoppter Umfangsfläche 9 abschnittsweise durch die Öffnung 36 ragt. Das Betätigungselement 8 ist dreh- und schwenkbar in dem Gehäuse 6 gelagert. Hierzu ragt in die eine Stirnseite 10 des Betätigungselementes 8 eine bereichsweise flexibel ausgebildete Achse 11 und die andere Stirnseite 12 ist über einen Zapfen 13 auf und ab verschiebbar in dem Gehäuse 6 geführt. Im Weiteren ist die der Achse 11 zugeordnete Stirnseite 10 des Betätigungselementes 8 mit einer vertieft ausgeführten Rastkurve 14 und die den Zapfen 13 aufweisende Stirnseite 12 mit in Umfangsrichtung weisenden Schaltnocken 15 versehen.

Ein dem Gehäuse 6 zugeordneter Sockel 16 umfasst Klipsarme 17 zur Befestigung des Schalters 1 in der Speiche 2. An dem Sockel 16 sind zueinander beabstandete Lager 18 zur verschwenkbaren Verklipsung einer das Betätigungselement 8 umgreifenden Gabel 19 angeformt. Die Gabel 19 besteht im Wesentlichen aus einem parallel zur Längsachse des Betätigungselementes 8 ausgerichteten, im Querschnitt zylindrischen Steg 20, der mit den Lagern 18 zusammenwirkt und an dem zwei Schenkel 21 angeformt sind, zwischen die das Betätigungselement 8 eingesetzt ist. Die Schenkel 21, von denen einer als Betätiger 22 und einer als federnder Rastarm 23 dient, verlaufen parallel sowie beabstandet zu den Stirnseiten 10, 12 des Betätigungselementes 8.

Bei einer Druckbeaufschlagung des Betätigungselementes 8 verschwenkt dasselbe, wobei die Schwenkbewegung des Betätigungselementes 8 über den verschiebbar gelagerten Zapfen 13 auf den Betätiger 22 übertragen wird, dem an seinem freien Ende ein erstes Schaltelement 24 zugeordnet ist, das daraufhin einen Stromkreis schließt. Das erste als Tastschalter 25 ausgebildete Schaltelement 24 ist aus einem in einem Dom 26 einer flexiblen Schaltmatte 27 angeordneten Schaltkontakt zur Kontaktierung eines zugeordneten Festkontaktes zusammengesetzt. Beim Loslassen des Betätigungselementes 8 wird dasselbe durch die Rückstellkraft des Domes 26 der Schaltmatte 27 über den Betätiger 22 in seine Ausgangslage verschwenkt.

Bei einer Drehbeaufschlagung des Betätigungselementes 8 wirken die Schaltnocken 15 des Betätigungselementes 8 mit einem zweiten Schaltelement 31, nämlich einem Schaltarm 28 eines dem Sockel 16 zugeordneten 2-Wege-Schaltdetektors 29, zusammen. Um ein taktiles Erfassen eines Drehschaltweges des Betätigungselementes 8 sicherzustellen, greift ein endseitiger Nocken 30 des federnden Rastarmes 23 in die Rastkurve 14 des Betätigungselementes 8 ein.

Der Tastschalter 25 und der 2-Wege-Schaltdetektor 29 sind mit einer Anschlusskontakte 32 aufweisenden sockelseitigen Leiterplatte 33 verbunden, der weitere Einzelschalter 34 und Leuchtdioden 35 zugeordnet sind.

### Bezugszeichenliste

- 1.: Schalter
- 2.: Speiche
- 3.: Lenkrad
- 4.: Speiche
- 5.: Drehschalter
- 6.: Gehäuse
- 7.: Deckel
- 8.: Betätigungselement
- 9.: Umfangsfläche
- 10.: Stirnseite
- 11.: Achse
- 12.: Stirnseite
- 13.: Zapfen
- 14.: Rastkurve (von 8)
- 15.: Schaltnocken
- 16.: Sockel
- 17.: Klipsarm
- 18.: Lager
- 19.: Gabel

- 20.: Steg
- 21.: Schenkel
- 22.: Betätiger
- 23.: Rastarm
- 24.: erstes Schaltelement
- 25.: Tastschalter
- 26.: Dom
- 27.: Schaltmatte
- 28.: Schaltarm
- 29.: 2-Wege-Schaltdetektor
- 30.: Nocken
- 31.: zweites Schaltelement
- 32.: Anschlusskontakte
- 33.: Leiterplatte
- 34.: Einzelschalter
- 35.: Leuchtdiode
- 36.: Öffnung

## Patentansprüche

1. Elektrischer Schalter, insbesondere Lenkradschalter, mit einem schwenk- und drehbar in einem Gehäuse (6) gelagerten, durch Druck und Drehung beaufschlagbaren Betätigungselement (8), wobei das Betätigungselement (8) zwischen Schenkeln (21) einer in dem Gehäuse (6) schwenkbar angeordneten Gabel (19) derart eingesetzt ist, dass seine Stirnseiten (10, 12) parallel zu den Schenkeln (21) ausgerichtet sind, wobei in eine Stirnseite (10) des Betätigungselementes (8) eine mit dem Gehäuse (6) verbundene flexible Achse (11) oder eine flexibel an dem Gehäuse (6) angelenkte Achse eingreift, und die andere Stirnseite (12) des Betätigungselementes (8) verschiebbar in dem Gehäuse (6) geführt ist, **dadurch gekennzeichnet, dass** die andere Stirnseite (12) des Betätigungselementes (8) einen Zapfen (13) aufweist, der zwischen gehäuseseitigen Stegen angeordnet ist, wobei der dem Zapfen (13) zugeordnete Schenkel (21) als Betätiger (22) für ein erstes Schaltelement (24) bei einer Druckbeaufschlagung des Betätigungselementes (8) dient und der dem Betätiger (22) gegenüberliegende Schenkel (21) der Gabel (19) als federnder Rastarm (23) ausgebildet ist, der mit einer Rastkurve (14) des Betätigungselementes (8) zusammenwirkt.

2. Schalter nach Anspruch 1, **dadurch gekennzeichnet, dass** der Rastarm (23) an seinem freien Ende einen in die stirnseitig in das Betätigungselement (8) eingelassene Rastkurve (14) eingreifenden Nocken (30) aufweist.

3. Schalter nach Anspruch 1, **dadurch gekennzeichnet, dass** die Gabel (19) einen den Betätiger (22) und den Rastarm (23) jeweils endseitig verbindenden, im Querschnitt zylindrischen Steg (20) umfasst, der mit einem Sockel (16) des Gehäuses (6) verklipst ist.

4. Schalter nach Anspruch 1, **dadurch gekennzeichnet, dass** das erste Schaltelement (24) als dem Sockel (16) zugeordneter Tastschalter (25) ausgebildet ist.

5. Schalter nach Anspruch 4, **dadurch gekennzeichnet, dass** der Tastschalter (25) einen in einem Dom (26) einer flexiblen Schaltmatte (27) angeordneten Schaltkontakt zur Beaufschlagung eines zugeordneten Festkontaktes umfasst.

6. Schalter nach einem der Ansprüche 1 bis 5, **dadurch gekennzeichnet, dass** das Betätigungselement (8) auf der anderen Stirnseite (12) in Umfangsrichtung weisende Schaltnocken (15) zur Beaufschlagung eines zweiten Schaltelementes (31) bei einer Drehung des Betätigungselementes (8) aufweist.

7. Schalter nach Anspruch 6, **dadurch gekennzeichnet, dass** das zweite Schaltelement (31) als dem Sockel (16) zugeordneter 2-Wege-Schaltdetektor (29) ausgebildet ist, dessen Schaltarm (28) mit den Schaltnocken (15) des Betätigungselementes (8) zusammenwirkt.

8. Schalter nach einem der Ansprüche 1 bis 7, **dadurch gekennzeichnet, dass** das erste Schaltelement (24) und das zweite Schaltelement (31) mit einer im Sockel (16) angeordneten Leiterplatte (33) in Verbindung stehen.

9. Schalter nach Anspruch 8, **dadurch gekennzeichnet, dass** auf der Leiterplatte (33) weitere Einzelschalter (34) und/oder Leuchtdioden (35) befestigt sind.

10. Schalter nach einem der Ansprüche 1 bis 9, **dadurch gekennzeichnet, dass** das Gehäuse (6) mit einem eine Öffnung (36) für das Betätigungselement (8) aufweisenden Deckel (7) versehen ist, wobei das Betätigungselement (8) abschnittsweise durch die Öffnung (36) ragt.

11. Schalter nach einem der Ansprüche 1 bis 10, **dadurch gekennzeichnet, dass** die Umfangsfläche des Betätigungselementes (9) genoppt ist.

## Claims

1. Electric switch, in particular a steering wheel switch, having an actuating element (8) mounted pivotably and rotatably in a housing (6) and capable of being acted upon by pressure and rotation, wherein the actuating element (8) is inserted between legs (21) of a fork (19) pivotably arranged in the housing (6) in such a way that its end faces (10, 12) are oriented parallel to the legs (21), wherein a flexible axle (11) connected to the housing (6) or an axle flexibly articulated on the housing (6) engages in an end face (10) of the actuating element (8) and the other end face (12) of the actuating element (8) is held displaceably in the housing (6), **characterised in that** the other end face (12) of the actuating element (8) comprises a pin (13) arranged between webs.on the housing, wherein the leg (21) associated with the pin (13) serves as an actuator (22) for a first switching element (24) when the actuating element (8) is acted upon by pressure and the leg (21) of the fork (19) located opposite the actuator (22) is constructed as a springy catch arm (23) which acts in conjunction with a catch curve (14) of the actuating element (8).

2. Switch according to claim 1, **characterised in that** the catch arm (23) has at its free end a cam (30) engaging in the catch curve (14) let into the end face of the actuating element (8).

3. Switch according to claim 1, **characterised in that** the fork (19) comprises a web (20) of cylindrical cross-section connecting at each end the actuator (22) and the catch arm (23) which web is clipped to a base of the housing (6).

4. Switch according to claim 1, **characterised in that** the first switching element (24) is constructed as a pushbutton (25) associated with the base (16).

5. Switch according to claim 4, **characterised in that** the pushbutton (25) comprises a switching contact arranged in a dome (26) of a flexible switching mat (27) for acting upon an associated fixed contact.

6. Switch according to any of claims 1 to 5, **characterised in that** on the other end face (12) the actuating element (8) comprises switching cams (15) pointing in the circumferential direction for acting upon a second switching element (31) when the actuating element (8) is rotated.

7. Switch according to claim 6, **characterised in that** the second switching element (31) is constructed as a two-way switching detector (29) associated with the base (16) whose switching arm (28) acts in conjunction with the switching cams (15) of the actuating element (8).

8. Switch according to any of claims 1 to 7, **characterised in that** the first switching element (24) and the second switching element (31) are connected to a printed circuit board (33) arranged in the base (16).

9. Switch according to claim 8, **characterised in that** other individual switches (34) and/or light-emitting diodes (35) are fastened to the printed circuit board (33).

10. Switch according to any of claims 1 to 9, **characterised in that** the housing (6) is provided with a cover (7) comprising an opening (36) for the actuating element (8), wherein sections of the actuating element (8) project through the opening (36).

11. Switch according to any of claims 1 to 10, **characterised in that** the circumferential surface of the actuating element (9) is knurled.

## Revendications

1. Commutateur électrique, en particulier commutateur de volant de direction, avec un élément d'actionnement (8) sollicitable en pression et en rotation, monté à basculement et à pivotement dans un boîtier (6), l'élément d'actionnement (8) étant disposé entre des branches (21) d'une fourche (19) montée à basculement dans le boîtier (6), de façon que ses côtés frontaux (10, 12) soient orientés parallèlement aux branches (21), un axe flexible (11) relié au boîtier (6) ou un axe articulé de manière flexible sur le boîtier (6) s'engageant dans un côté frontal (10) de l'élément d'actionnement (8), et l'autre côté frontal (12) de l'élément d'actionnement (8) étant guidé à coulissement dans le boîtier (6), **caractérisé en ce que** l'autre côté frontal (12) de l'élément d'actionnement (8) comporte un tourillon (13) qui est disposé entre des barrettes côté boîtier, la branche (21) associée au tourillon (13) servant de moyen d'actionnement (22) pour un premier élément de commutation (24) lors d'une mise en pression de l'élément d'actionnement (8), et la branche (21) de la fourche (19) opposée au moyen d'actionnement (22) étant conformée en bras élastique de crantage (23) qui coopère avec une courbe de crantage (14) de l'élément d'actionnement (8).

2. Commutateur selon la revendication 1, **caractérisé en ce que** le bras de crantage (23) comporte, à son extrémité libre, un doigt (30) s'engageant dans la courbe de crantage (14) ménagée côté frontal dans l'élément d'actionnement (8).

3. Commutateur selon la revendication 1, **caractérisé en ce que** la fourche (19) comprend une barrette à section transversale cylindrique (20) qui relie par chacune de ses extrémités le moyen d'actionnement (22) et le bras de crantage (23) et qui est clipsée au socle (16) du boîtier (6).

4. Commutateur selon la revendication 1, **caractérisé en ce que** le premier élément de commutation (24) est conformé en commutateur à touche (25) associé au socle (16).

5. Commutateur selon la revendication 4, **caractérisé en ce que** le commutateur à touche (25) comprend un contact de commutation disposé dans un plot (26) d'un tapis de commutation souple (27) et destiné à solliciter un contact fixe associé.

6. Commutateur selon une des revendications 1 à 5, **caractérisé en ce que** l'élément d'actionnement (8) comporte, sur l'autre côté frontal (12), des poussoirs de commutation (15) orientés dans la direction circonférentielle pour solliciter un second élément de commutation (31) en cas de rotation de l'élément d'actionnement (8).

7. Commutateur selon la revendication 6, **caractérisé en ce que** le second élément de commutation (31) est conformé en détecteur de commutation à deux voies (29) qui est associé au socle (16) et dont le bras de commutation (28) coopère avec les poussoirs de commutation (15) de l'élément d'actionnement (8).

8. Commutateur selon une des revendications 1 à 7, **caractérisé en ce que** le premier élément de commutation (24) et le second élément de commutation (31) sont reliés à une plaque de circuit imprimé (33) disposée dans le socle (16).

9. Commutateur selon la revendication 8, **caractérisé en ce que** d'autres commutateurs individuels (34) et/ou diodes électroluminescentes (35) sont fixés sur la plaque de circuit imprimé (33).

10. Commutateur selon une des revendications 1 à 9, **caractérisé en ce que** le boîtier (6) est muni d'un couvercle (7) pourvu d'une ouverture (36) pour l'élément d'actionnement (8), l'élément d'actionnement (8) traversant partiellement l'ouverture (36).

11. Commutateur selon une des revendications 1 à 10, **caractérisé en ce que** la surface périphérique de élément d'actionnement (9) est garnie de picots.
